# EUROPEAN PATENT SPECIFICATION

(11) **EP 2 246 541 B1**
(45) Date of publication and mention of the grant of the patent: **26.12.2012**
(21) Application number: 10157031.5
(22) Date of filing: 19.03.2010
(51) Int. Cl.: F01N 9/00, G01N 29/11, F01N 13/00

(54) **Method and devices of detecting accumulation amount of particulates**
Verfahren und Vorrichtungen zur Erkennung der Ansammlungsmenge von Partikeln
Procédés et dispositifs pour détecter l'accumulation de particules

(30) Priority: 22.04.2009 JP 2009103561
(43) Date of publication of application: 03.11.2010
(73) Proprietor: NGK Insulators, Ltd., Nagoya-city, Aichi 467-8530 (JP)
(72) Inventor: Kondo, Jungo, Nagoya-city, Aichi 467-8530 (JP); Matsuhiro, Keiji, Nagoya-city, Aichi 467-8530 (JP); Iwata, Yuichi, Nagoya-city, Aichi 467-8530 (JP); Aoki, Kenji, Nagoya-city, Aichi 467-8530 (JP); Ejiri, Tetsuya, Nagoya-city, Aichi 467-8530 (JP)
(74) Representative: TBK

(56) References cited:
- EP-A1- 2 172 624
- WO-A2-2007/130896
- WO-A2-2009/031600
- US-A1- 2007 024 289

## Description

### TECHNICAL FIELD

The present invention relates to a method and a device for detecting an accumulation amount of particulates, which may be used for detection of PM accumulation amount in a filter disposed in an exhaust system of an internal combustion engine such as a diesel engine or the like.

### BACKGROUND ARTS

Toxic substances in the internal combustion engine, such as the diesel engine, are discharged as PM (particulate matter: soot composed of carbon fine particles, high-molecular weight hydrocarbon fine particles, sulfur-based fine particles such as sulfate, etc.). Since the Environmental Agency recently has considered deciding an environmental criterion with respect to fine particulates with particle size of 2.5 µm or less to more strictly regulate particulates, a development race has been performed to respond to the stricter regulations.

As an exhaust emission control system for diesel engine, a sealed type ceramic honeycomb body (diesel PM filter: DPF) is prevalent. The DPF has a ceramic honeycomb structure in which both ends of opening parts of cells are alternately sealed. That is, the DPF includes inflow-side cells sealed on exhaust gas downstream side, outflow-side cells sealed on exhaust gas upstream side, and a cell partition wall defining the inflow-side cells and the outflow-side cells, respectively. The particulates are trapped by passing exhaust gas through pores of the cell partition wall.

However, since accumulation of the particulates causes increase in pressure loss of exhaust gas in the DPF, the DPF must be regenerated by removing the accumulated particulates to suppress deterioration of output or fuel consumption in the internal combustion engine. Therefore, forced regeneration of the DPF is being performed by burning the accumulated PM, for example, according to the following process. That is, the temperature of exhaust gas is raised by adding a reducing agent, such as fuel, to the exhaust gas, the reducing agent is burned with an oxidation catalyst disposed on the upstream side of the DPF, and the resulting high-temperature exhaust gas is then supplied to the DPF.

However, when such a regeneration control is performed in a state where the particulates are trapped within the filter in an accumulation amount beyond a certain filter use limit value, cracking or melting loss of the filter is caused by localization of temperature or excessive rise of overall temperature of the filter resulting from the burning of PM. For preventing such a failure, prediction of accumulation amount of particulates within the filter is performed by measuring the pressure loss in the filter, an intake air quantity, an exhaust gas temperature, a fuel injection quantity, an EGR opening, an engine speed or the like and performing arithmetic processing thereto in ECU.

On the other hand, in the general internal combustion engine such as the diesel engine, a value is obtained by multiplying a safety ratio to this filter use limit value and then adopted as a regeneration control point. The point is generally represented by regeneration control point (g/L) = filter use limit value (g/L) × safe factor, wherein the safe factor is 0 < safe factor < 1. Accordingly, the regeneration control point is set so as to satisfy the relationship of regeneration control point (g/L) < filter use limit value (g/L).

This safety factor is differently set by each automobile maker, and is determined according to the completion rate of prediction technique for accumulation amount of particulates in the filter or the guideline for safety of each maker. As the safety factor is closer to 1, the filter regeneration becomes less frequent, so that the fuel efficiency is less deteriorated. Therefore, the accumulation amount of particulates in the filter needs to be accurately predicted.

When the accumulation amount of particulates is determined to reach the regeneration control point, the exhaust gas temperature is forcedly raised to perform the regeneration of the filter. A method therefor is described in Japanese Patent Publication No. Sho 59-204747A. That is, a microwave transmitting antenna and a microwave receiving antenna are set respectively on opposed side walls of an exhaust gas conduit to measure a concentration of graphite distributing between the both.

Further, a method for detecting soot accumulated in DPF is described in "Advanced DPF soot sensor presented by GE: International CTI Forum 2-4 Dec", in which RF transmitting antenna and receiving antenna are set respectively at the inlet and outlet of a DPF container. The sensor uses electromagnetic wave having a frequency of 1 GHz or lower, so that the measurement sensitivity and precision are decided based on the frequency.

In Japanese Patent Publication No. 2009-2276A, a transmitting antenna and a receiving antenna are mounted on a center part of an outer wall of a DPF filter so as to be opposed to each other. An electromagnetic wave of several tens GHz to several tens THz is transmitted from the transmitting antenna, passed through the filter, and received by the receiving antenna mounted on the opposite side. The accumulation amount of particulates to the filter is thereby calculated based on the receiving intensity of the electromagnetic wave.

Japanese Patent Publication No. 2007-79466A discloses an LN modulator using a lithium niobate thin plate.
Further background art is for example known from the documents WO 2009/031600 A2 and US 2007/0024289 A1 as well as the post-published document EP 2 172 624 A1.

However, in detection of the accumulation amount of particulates such as soot by use of microwave, absorption of carbon particles, main components of soot, is not large. In the GE soot sensor of "Advanced DPF soot sensor presented by GE: International CTI Forum 2-4 Dec", for example, a dynamic range of about 15 dB is obtained by arithmetic processing such as average processing.

According to data disclosed by GE, a specification value of measurement precision of ±0.5 g/L can be obtained only within an accumulation amount range of from 2 to 4 g/L, and the measurement precision is unclear in the other range. Further, as a some degree of soot is accumulated in a filter, the receiving sensitivity is deteriorated. As a result, as the soot amount is increased, the receiving sensitivity does not respond to the increase of the soot amount and rather fluctuates. That is, the assured detection limit of the soot amount is 4 g/L, and the dynamic range is about 15 dB in the measurable range of soot amount.

On the other hand, the accumulation amount of soot trapped in the DPF is usually 5 g/L or more. It is thus required that the soot amount can be measured up to 6 g/L at a constant receiving sensitivity. In particular, it is required that the gradient of receiving sensitivity with respect to the soot amount is constant (measurement sensitivity is constant) for judging the initiation of the regeneration of the filter. If the assured detection limit is about 4 g/L at most, only an algorithm of performing the regeneration can be established even when the filter has a sufficiently large capacity left for accumulation. Further, when the dynamic range is about 15 dB, the estimation error of soot amount is large so that only a measurement precision of ±0.5 g/L can be obtained and the accurate value of soot accumulation amount cannot be judged. It is thus insufficient on the viewpoint of improving fuel economy to limit the industrial applicability.

In Japanese Patent Publication No. 2009-2276A, the transmitting antenna and the receiving antenna are set on the container outer wall of the DPF filter so as to be opposed to each other, and an electromagnetic wave having a frequency of several tens GHz to several tens THz is used and radiated so as to transverse the filter. The wave is thus transmitted by particulates existing within a cross section of the filter, and its transmitted amount is measured. According to the examples, electromagnetic wave having a frequency of 600 GHz is irradiated to the filter to transverse it, so that the soot amount is evaluated. According to the disclosure of Japanese Patent Publication No. 2009-2276A, it is preferred to further raise the frequency of the electromagnetic wave toward several tens THz on the viewpoint of detection sensitivity.

The inventors have tried to use the electromagnetic wave of 600 GHz according to the teachings of Japanese Patent Publication No. 2009-2276A, and to set the transmitting antenna in a upstream pipe and the receiving antenna in a downstream pipe so that the accumulation amount of soot into the filter is detected. It was thus proved that the detection sensitivity of soot was superior than the data of the receiving sensitivity of the GE sensor disclosed in "Advanced DPF soot sensor presented by GE: International CTI Forum 2-4 Dec".

However, when the soot amount exceeds 2g/L, for example, the receiving sensitivity was lowered to - 50 dB or less, so that the detection becomes difficult in actual use. That is, the sensor described in Japanese Patent Publication No. 2009-2276A proved to be rather insufficient compared with the above GE sensor on the viewpoint of the detectable range of the soot.

### SUMMARY OF THE INVENTION

An object of the invention is to provide a method and a device for detecting an accumulation amount of particulates trapped by a filter, so that the detection sensitivity is improved and the detection of the accumulation amount is made possible in a wide range of preferably up to at least 6 g/L, and more preferably 8 g/L.
Another object of the invention is to enable detecting the accumulation amount as a sensitivity preferably having a dynamic range of 25 dB or higher in a range of soot amount of 0 to 6 g/L.

According to an aspect of the present invention, there is provided a method of detecting an accumulation amount of particulates, as defined in any one of claims 1 to 4.
According to another aspect of the present invention, there is provided a device for detecting an accumulation amount of particulates, as defined in any one of claims 5 to 8.

According to the present invention, the frequency of the electromagnetic wave irradiated to the filter is made 80 GHz or higher, so that the detection sensitivity of the particulates trapped in the filter can be considerably improved. On the viewpoint, the frequency of the electromagnetic wave irradiated to the filter may more preferably be 100 GHz or higher.

Further, the frequency of the electromagnetic wave irradiated to the filter is made 200 GHz or lower according to the present invention. The detection of the particulates can be made at a high sensitivity in a wider range of 0 to 6 g/L, in which the detection at high sensitivity has been limited in prior arts.

As described above, according to the present invention, when the particulates trapped in the filter is detected using electromagnetic wave, it is possible to perform the detection at a high sensitivity in a wide range of 0 to 6 g/L, which has not been attained. The industrial applicability of the present invention is thereby improved to provide a considerable progress toward the practical use in the field.

### BRIEF DESCRIPTION OF THE DRAWINGS

Fig. 1 is a block diagram schematically showing a device for detecting an accumulation amount of particulates.
Fig. 2 is a partially enlarged cross-sectional view showing an area around a filter and a container in the device.
Fig. 3 is a cross sectional enlarged view showing an area around a filter and a container in the device according to the present invention.
Fig. 4 is a view schematically showing positional relationship of electromagnetic wave and a filter.
Fig. 5 is a graph showing a relationship between the electromagnetic wave irradiated to soot trapped in a filter and the absorption sensitivity.
Fig. 6 is a graph showing a relationship between the amount of soot trapped in the filter and the receiving intensity of electromagnetic wave (the electromagnetic wave has a frequency of 0.1 THz).
Fig. 7 is a graph showing a relationship between the amount of soot trapped in the filter and the receiving intensity of electromagnetic wave (the electromagnetic wave has a frequency of 0.08 THz).
Fig. 8 is a graph showing a relationship between the amount of soot trapped in the filter and the receiving intensity of electromagnetic wave (the electromagnetic wave has a frequency of 0.07 THz).
Fig. 9 is a graph showing a relationship between the amount of soot trapped in the filter and the receiving intensity of electromagnetic wave (the electromagnetic wave has a frequency of 0.20 THz).
Fig. 10 is a graph showing a relationship between the amount of soot trapped in the filter and the receiving intensity of electromagnetic wave (the electromagnetic wave has a frequency of 0.23 THz).
Fig. 11 is a graph showing absorption property of electromagnetic wave by a DPF filter made of cordierite.

### EMDODIMENTS OF THE INVENTION

As a transmitting element, the followings are preferred but are not limited.

### (Frequency 80 GHz to 100 GHz)

MMIC such as GaAs or SiGe or gun diode (80 GHz to 0.2 THz)

An optical multiplying system adapted to generate the above-mentioned electromagnetic wave by generating high-order optical sideband waves by an LN modulator to take out a sideband wave of a desired order, and taking out a beat signal thereof by a photomixer. In this case, a Mach-Zehnder optical modulator or phase modulator, or an integrated modulator thereof can be used as the LN modulator. When a thin plate structure described in Japanese Patent Application Laid-Open No. 2007-79466A is used as the LN modulator, but is not particularly limited, half-wavelength voltage can be reduced to generate the electromagnetic wave at low driving voltage.

Further, a PPLN (Periodically Poled Lithium Niobate) element or PPLT (Periodically Poled Lithium Tantalate) element having a domain-inverted structure (QPM: Quasi-Phase Matching) formed thereon, and an optical waveguide (including a slab structure) element using Cherenkov radiation can be used.

Examples of a receiving device include, but are not limited to, a shot key diode such as GaAs, InAs or GaN, a bolometer, and an element using pyroelectric effect.

The particulates mean substances having the property of being suspended within a gas, and the particle size thereof is typically 10 nm to 10 µm but is not limited. Examples of the substances constituting the particulates include, but are not particularly limited to, PM (particulate matter) mainly composed of carbon, hydrocarbon (HC), magnetic powder such as ferrite powder, sulfate, and nitrate.

According to a preferred embodiment, the transmitting antenna and the receiving antenna are provided with the upstream pipe and/or downstream pipe. According to this embodiment, the electromagnetic wave having a frequency of 80 GHz or higher and 200 GHz or lower is used, so that the electromagnetic wave can propagate and diffuse along the inner surfaces of the pipes and the container. The wave can be thus efficiently irradiated onto the filter over the wide area and absorbed by the trapped particulates efficiently, so that the overall sensitivity can be improved.

Further, in the case that the transmitting and receiving antennas are provided in the pipes, respectively, the devices for performing the transmission and reception of the electromagnetic wave may be provided outside of the pipes.

According to the present invention, the transmitting may be provided in the upstream pipe and the receiving antenna may be provided in the downstream pipe. Alternatively, the transmitting antenna may be provided in the downstream pipe and the receiving antenna may be provided in the upstream pipe.

Further, the electromagnetic wave may be collimated with a lens system to provide parallel beams, so as to reduce the influence of the filter and to detect the particulates at a higher sensitivity.

The position of the transmitting and receiving antennas is not particularly limited. According to a preferred embodiment, a filter trapping particulates and a container is connected to pipes flowing a gas containing the particulates, so that the container has an inner diameter larger than those of the pipes, and the transmitting and receiving antennas are provided in the pipes, respectively.

Generally, the container containing the filter has an inner diameter larger than those of the upstream and downstream pipes and the connection parts are tapered. The transmitted electromagnetic wave spreads over from the pipe along the inner wall of the container to some degree, so that the wave is effectively radiated to a wide area of the filter. The accumulation amount of the particulates over the whole filter can be thereby detected. At the same time, the electromagnetic wave is irradiated along the container inner surface and confined at the emission side toward the receiving antenna, so that the wave can be received by the receiving antenna efficiently.

Further, when the millimeter wave or terahertz wave is transmitted with the transmitting antenna being set within the upstream pipe, the wave was effectively radiated to a wide range of the filter while spreading over from the pipe to the container to some degree. When the frequency of the electromagnetic wave is increased, the rectilinearity is enhanced and the absorption of soot is increased, so that the accumulation amount can be detected. This effect should be obtained without particular differences when receiving of electromagnetic wave is performed on the upstream side with the transmitting antenna being set within the downstream pipe.

Actually, however, it was found that the sensor sensitivity becomes higher when performing the receiving within the upstream pipe with the transmitting antenna being arranged within the downstream pipe than when performing the receiving within the downstream pipe with the transmitting antenna being arranged on the upstream side.

The reason of this phenomenon can be estimated as follows although details have not been found.
That is, in an actual diesel engine or the like, soot is deposited on the outlet side of the DPF filter, and accumulated toward the inlet side. In a form adapted to transmit the electromagnetic wave from the transmitting antenna within the pipe, the pipe and the filter container function as a waveguide to electromagnetic wave. In the pipe part, the filter container wall surface and the filter, a portion without accumulation of particulates and a portion with accumulation of particulates have different propagation constants to this propagating electromagnetic wave, and reflection due to a difference in characteristic impedance is caused in an interface between such portions differed in the propagation constant.

In the case of the filter for trapping particulates, since it has a regular and periodic structure, and particulates are accumulated on the downmost stream side of the filter, the electromagnetic wave is strongly influenced by attenuation by the accumulated particulates when the electromagnetic wave is radiated to the filter with the transmitting antenna being set within the outlet pipe. The sensitivity can be consequently increased. The deterioration in sensitivity to the accumulation amount of particulates when setting the transmitting antenna within the upstream pipe is attributed to that the electromagnetic wave is attenuated first by passing through the filter having the periodic structure, and then further attenuated by passing through the particulates accumulated on the outlet side.

The filter is disposed within the container through which the gas containing particulates is distributed. As the filter, a one which can transmit the electromagnetic wave used in the present invention with lower transmissivity is more suitably used. Examples of the form of the filter include a honeycomb structure and a porous structure, and the honeycomb structure is particularly preferred. The filter is preferably formed of ceramics such as cordierite, silicon nitride, alumina or silicon carbide.

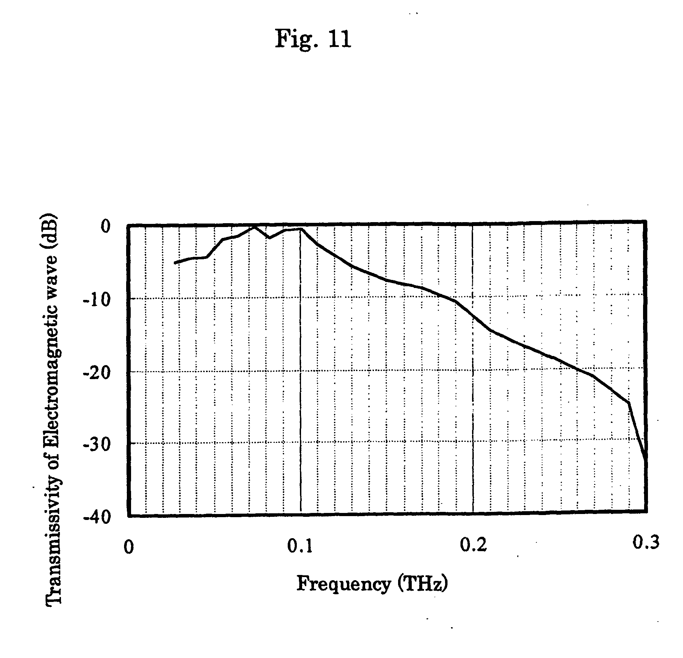

In the case that a filter, particularly DPF, made of cordierite is used, when the frequency of the irradiated electromagnetic wave exceeds 100 GHz (0.1 THz), the absorption of the electromagnetic wave was observed. In a frequency range of 0.1 to about 0.2 THz of the electromagnetic wave, the transmissivity was gradually lowered. It was, however, proved that the transmissivity was considerably lowered at a frequency of about 0.2 THz. As the transmissivity of the filter before trapping the particulates is considerably lowered, the measured value of the transmissivity of the filter trapping the particulates should be considerably lowered responsive to that. According to an example shown in Fig. 11, the DPF filter has a length of 200 mm and the transmissivity is considerably lowered at a frequency of about 0.2 THz to approach -20 dB. At the level, as the accumulation amount of the trapped particulates is increased, the transmissivity is easily lowered to below -40 dB, and further to below -50 dB. Therefore, the transmitsivity tends to approach, or tends to be below, the detection limit, resulting in an increase of detection error.
As described above, when the filter is made of cordierite, the advantageous effects of the present invention is further considerable.

In general, the inside diameter of the pipe is often set to, but is not limited to, 10 to 300 mm. The inside diameter (maximum value) of the container is set preferably to 20 mm or more, and set preferably to 1000 mm or less.

The container preferably includes a storage part for storing the filter, an upstream connection part and a downstream connection part. In this case, the inside diameter of the storage part is larger than that of the pipe. It is preferred that the inside diameter of the upstream connection part is gradually reduced from the storage part toward the upstream pipe. It is also preferred that the inside diameter of the downstream connection part is gradually reduced from the storage part toward the downstream pipe.

In the present invention, the intensity of the electromagnetic wave received by the receiving antenna is detected, and the accumulation amount of particulates trapped in the filter is computed based on the intensity. Although a concrete method therefor is not limited, the accumulation amount of particulates is preferably computed by substituting an electromagnetic wave intensity detected by an electromagnetic wave receiving means to a predetermined relational expression between intensity and accumulation amount.

Since the filter itself absorbs the electromagnetic wave to some degree, the receiving intensity is preliminarily measured, as a blank, in a state in which no particulates are trapped. The accumulation amount of particulates is calculated based on a difference from the receiving intensity in a state where the particulates are trapped and an electromagnetic wave absorption coefficient.

The electromagnetic wave absorption coefficient is expressed by a logarithm of electromagnetic wave transmissivity, and the transmissivity is a ratio of outgoing output to incoming output.

In the present invention, the exhaust emission control system may preferably further comprise a reducing agent supply means for supplying a reducing agent into exhaust gas on the upstream side of the filter. The reducing agent may be directly supplied into the exhaust gas, or can be indirectly supplied to the exhaust gas by post-injecting the reducing agent into a cylinder. When the temperature of the filter is higher than the igniting temperature of the reducing agent, the reducing agent burns within the filter, and the filter is raised in temperature to, for example, 600 °C or higher by the combustion heat, whereby the filter can be regenerated. The reducing agent supply means include a pump, an injector or the like. Further, an oxidization catalyst may be disposed on the upstream side of the filter, or a catalyst layer may be formed in the filter.

When the reducing agent supply means is used, a control means is desirably provided to control the drive of the reducing agent supply means based on a detection value of accumulation amount of particulates trapped in the filter. According to this, the reducing agent supply means can be driven at an optimum time to improve the fuel efficiency.

### EXAMPLES

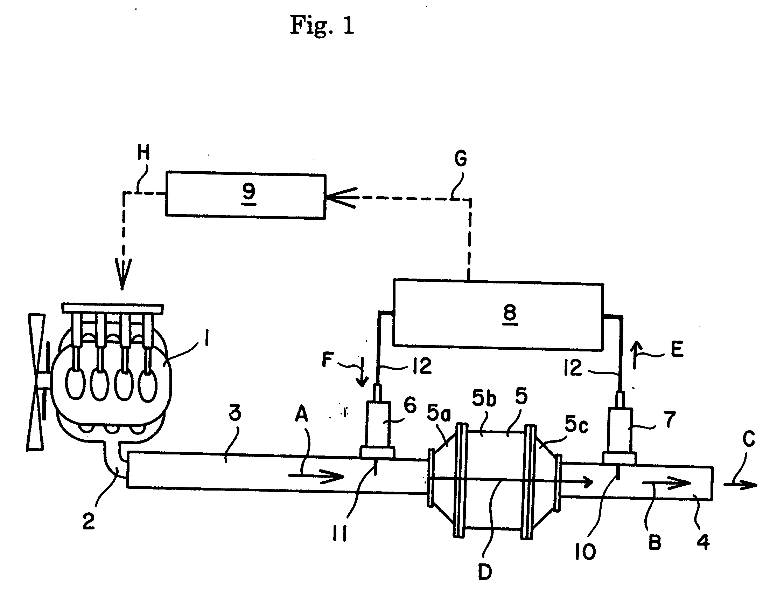

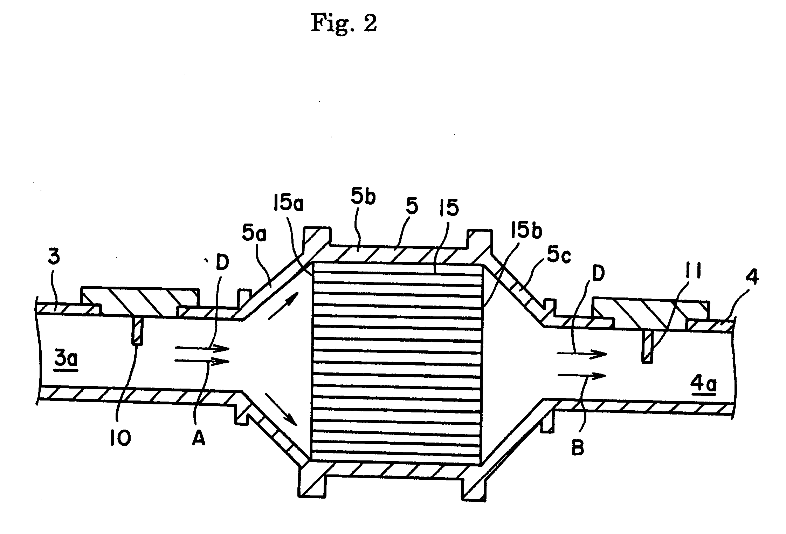

Fig. 1 schematically shows an exhaust emission control system exemplifying the basic structure underlying the present invention. An exhaust pipe 2 of an exhaust manifold of a diesel engine 1 is connected to a container 5 through an upstream pipe 3. A downstream pipe 4 is provided on the downstream side of the container 5. The container 5 includes, as shown in Fig. 2, a storage part 5b with a constant inside diameter for storing a filter, an upstream connection part 5a and a downstream connection part 5c.

A filter 15 is stored within the storage part 5b of the container 5. The filter 15 is composed of a porous ceramic honeycomb structure having a number of pores regularly formed therein. A part of the pores is sealed on the exhaust gas downstream side to form inflow-side cells, and the remainder thereof is sealed on the exhaust gas upstream side to form outflow-side cells. The inflow-side cells and the outflow-side cells are formed to be alternately adjacent to each other, whereby a honeycomb-shaped wall flow structure is constituted.

According to the uncovered example of Figs. 1 and 2, a transmitting antenna 11 is provided in a flow passage 3a of the upstream pipe 3 and connected to a transmitting element part 6 disposed out of the pipe, and a receiving antenna 10 is provided in a flow passage 4a of the downstream pipe 4 and connected to a receiving element part 7 mounted out of the pipe. The element parts 6 and 7 are connected to a control part 8 through wires 12.

Exhaust gas from the engine 1 flows in the upstream pipe 3 as shown by arrow A to enter into the container 5, in which it passes the filter 15 from an upstream end surface 15a, then flows in the flow passage 4a of the downstream pipe 4, and discharges out as shown by arrow C. Particulates are trapped and accumulated in the filter 15.

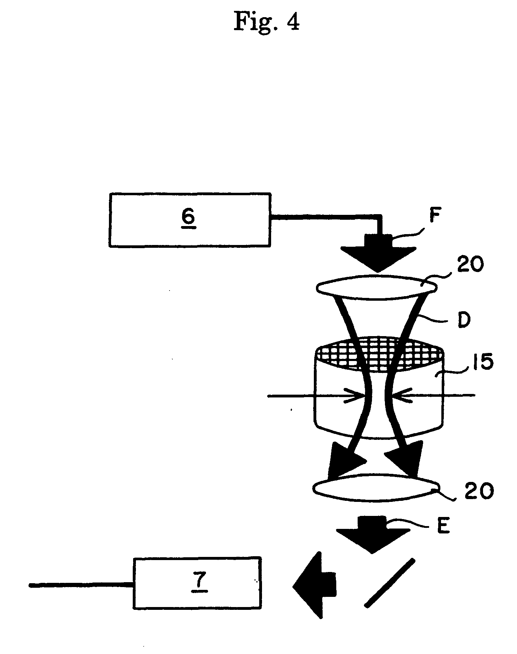

According to the present example, an electromagnetic signal is transmitted from a transmitting antenna 11 in a flow route 3a of the upstream pipe as an arrow D, based on a signal F transmitted by a control part 8. The electromagnetic wave propagates along the inner surfaces of the pipe 3 and the upstream connecting part 5a so that the wave is irradiated to the upstream end face 15a of the filter 15 over the wide area. The wave is then subjected to absorption and attenuation by the particulates accumulated in the filter 15, the filter material itself and propagate in the flow route 4a of the downstream pipe 4 as an arrow D, and then received by the receiving antenna 10.
The positional relationship of the electromagnetic wave and the filter is schematically shown in Fig. 4. Besides, 20 represents a lens system.

The received signal is transmitted to a control part 8 as shown by arrow E. The control part 8 processes the receiving signal and transmits information for transmitted electromagnetic wave and information for received electromagnetic wave to an arithmetic unit 9 as shown by arrow G. The arithmetic unit 9 compares the information for transmitted electromagnetic wave, e.g., the intensity, with the information for received electromagnetic wave, e.g., the intensity, and computes an accumulation amount in reference to information for a calibration curve showing a relationship between the electromagnetic wave intensity and the accumulation amount.

The computing result of accumulation amount is outputted as shown by arrow H so as to be usable. For example, cleaning of the filter 15 or output of a replacement signal for the filter can be performed when the accumulation amount exceeds a threshold value.

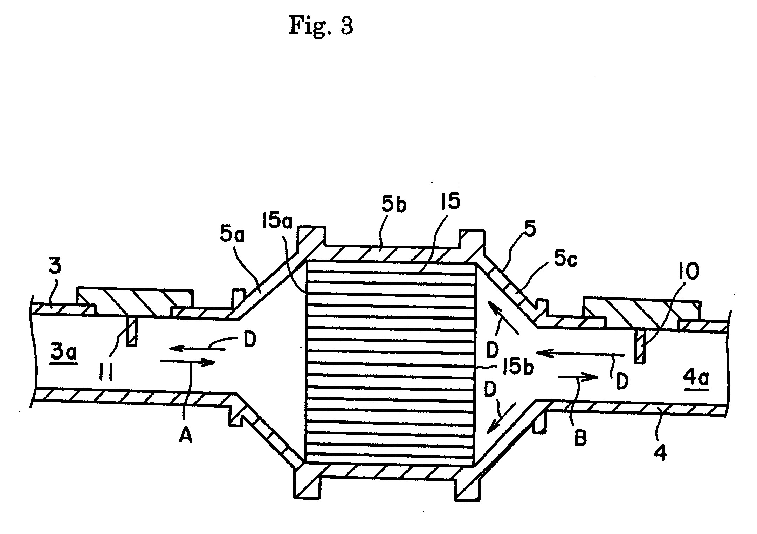

According to the present invention, as shown in Fig. 3, the receiving antenna 10 is provided in the flow route 3a of the upstream pipe 3, and the transmitting antenna 11 is provided in the flow route 4a of the downstream pipe 4. Accordingly, an electromagnetic signal is transmitted from the transmitting antenna 11 in a flow route 4a of the downstream pipe as an arrow D. The electromagnetic wave propagates along the inner surfaces of the pipe 3 and the downstream connecting part 5c so that the wave is irradiated to the downstream end face 15b of the filter 15 over the wide area. The wave is then subjected to absorption and attenuation by the particulates accumulated in the filter 15, the filter material itself and propagate in the flow route 3a of the upstream pipe 4 as an arrow D, and then received by the receiving antenna 10.

### (Experiment 1)

The device described in reference to Figs. 1 and 2 was manufactured and subjected to measurement experiment. The electromagnetic wave was irradiated onto a honeycomb type filter 15 trapping a know amount of the soots to measure the receiving intensity. The beam size of the electromagnetic wave at the filter was ϕ3mm, and the cell density of the honeycomb filter was 300 cpsi. The honeycomb filter was made of cordierite with a dimension of ϕ 150 mm and a length 0f 200 mm³. The accumulation amount of soot per an unit area at the end face 15a of the honeycomb was 17 or 29 mg/cm².

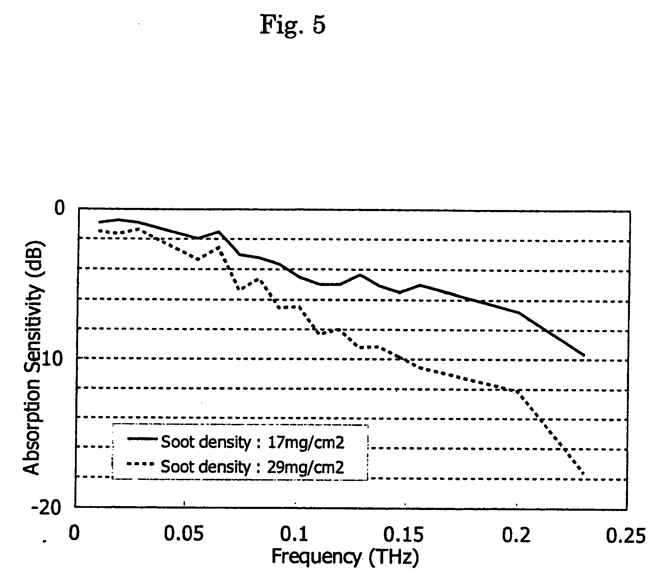

The frequency of the electromagnetic wave D irradiated onto the filter was changed in a range of 0 to 0.25 THz and the receiving intensity was measured. The results were shown in Fig. 5.

As can be seen from Fig. 5, in the frequency range of 0.25 THz or lower, the receiving intensity after passing through the filter was proved to be lowered as the frequency of the electromagnetic wave was increased. Particularly, the receiving intensity was considerably lowered in the case that the frequency exceeds 0.2 THz. It means that the dynamic range is considerably increased in a frequency range of 0.2 THz or higher.

### (Experiment 2)

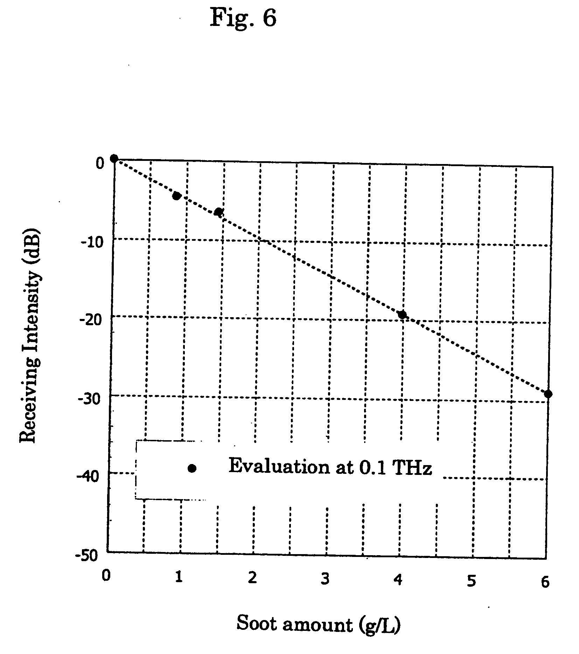

The relationship between the soot amount trapped in the filter and the receiving intensity was measured according to the same procedure as the Example 1. The frequency of the electromagnetic wave was changed to 0.07, 0.08, 0.10, 0.20 and 0.23 THz. The results of measurement at each frequency were shown in Figs. 6 to 10.

As shown in Figs. 6, 7 and 9, when the frequency of the electromagnetic wave is 0.10, 0.08 or 0.20 THz, the soot amount can be measured in a range of 0 to 6 g/L and the dynamic range is as large as about 25dB or more. That is, a practical detection range and a high sensitivity could be successfully attained at the same time.

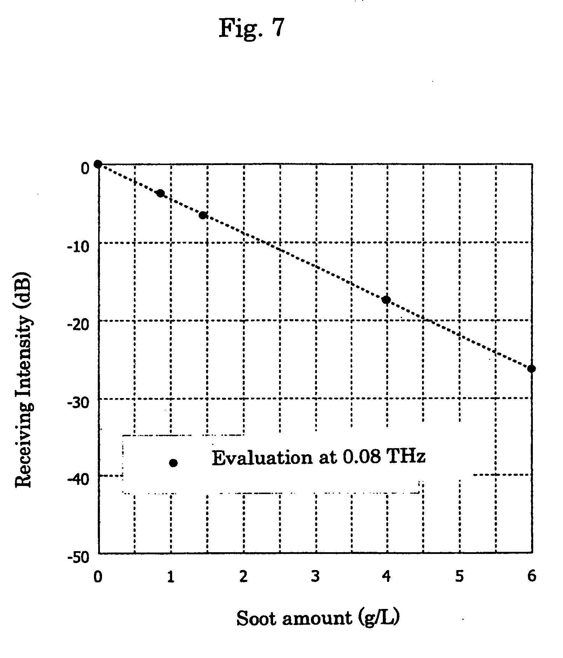

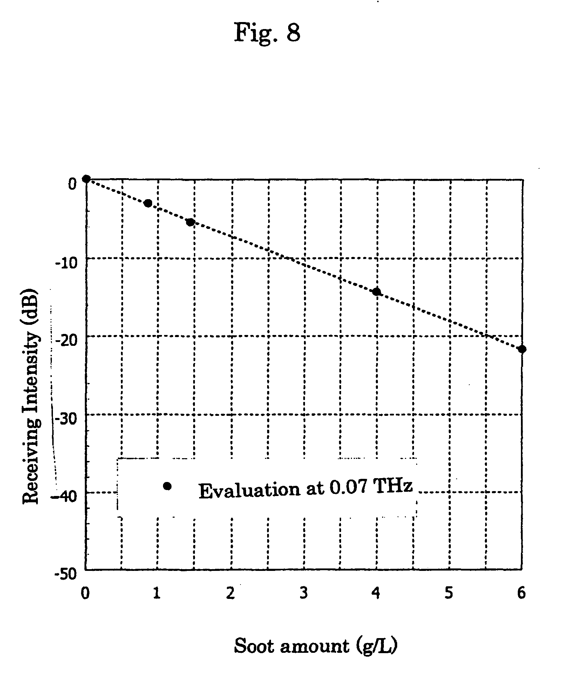

On the other hand, when the frequency of the electromagnetic wave is 0.07 THz (Fig. 8), the sensitivity is considerably lowered compared with that in the case of 0.08 THz (Fig. 7). It means that the absorption of soot is considerably changed at a frequency of electromagnetic wave of 0.08 THz. This result is based on unknown absorption property of soot.

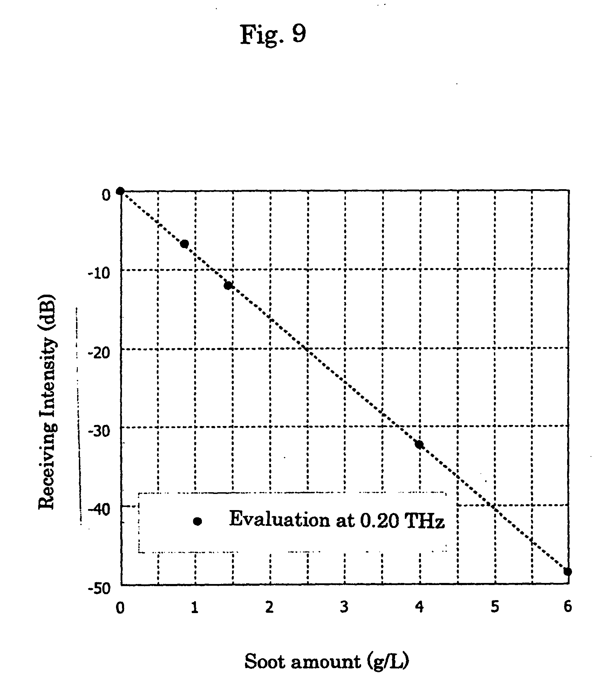

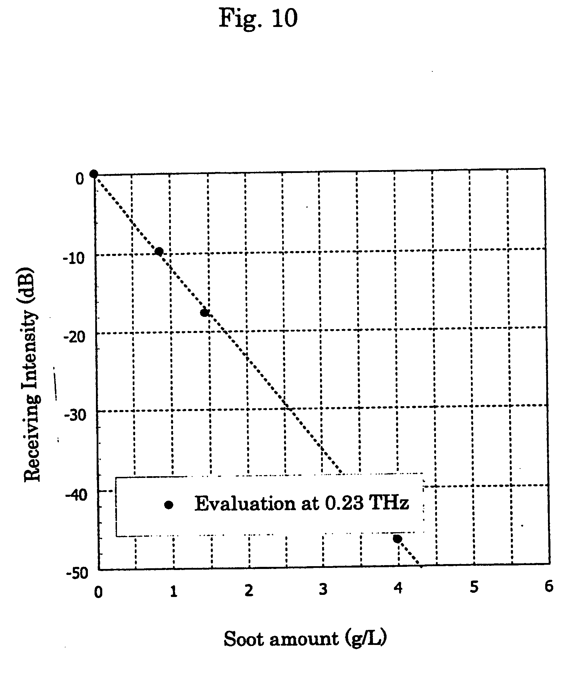

Further, when the frequency of the electromagnetic wave is 0.23 THz (Fig. 10), the receiving sensitivity is considerably increased with respect to the results shown in Fig. 9, so that the measurement range of soot amount is substantially lower than 4 g/L. The results are in conformity with the experimental results shown in Fig. 5 (Experiment 1). That is, when the frequency exceeds 0.20 THz, it is proved that the detectable range of soot amount is critically narrowed due to the considerable change of sensitivity.

### (Experiment 3)

A diesel particulate filter (DPF) made of cordierite was produced and its absorption property with respect to the frequency of electromagnetic wave was evaluated. The DPF had a cell density of 300 cpsi and a length of 200 mm. Electromagnetic wave was irradiated onto the DPF and the transmissivity was measured. The results of measurement of transmitsivity was shown in Fig. 11.

As a result, the transmissivity of the DPF was lowered in a frequency of of 0.1 THz or higher and larger than -10 dB in a frequency of 0.18 THz or below. The transmissivity was then considerably lowered at about 0.2 THz. It was proved that the transmissivity was below -20 dB as the frequency exceeds 0.25 THz. For example, when the soot accumulation amount is monitored, as the soot accumulation amount exceeds 3 g/L, the overall transmissivity becomes below -50 dB due to the absorption by the soot and DPF in the frequency range of 0.23 THz or higher. The transmissivity value reaches the detection limit range. As such, when the measured transmissivity of the filter before trapping the particulates is considerably lowered, the filter trapping the particulates is considerably lowered responsive to that. That is, in the frequency range of 0.2 THz or higher, as the accumulation amount of the particulates becomes large, the transmissivity would be easily below -40 dB, or even below - 50dB, so as to be near or below the detection limit. The detection error thus becomes considerable.

It was also confirmed that the transmissivity of the DPF is proportional with respect to the length. The transmissivity of the DPF having a length of 150 mm is thus 0.75 times of that having a length of 200 mm, which is shown in Fig. 11.

### (Description of Reference Numerals)

- 1: Engine
- 3: Upstream pipe
- 4: Downstream pipe
- 5: Container
- 5a: Upstream connection part
- 5b: Storage part
- 5c: Downstream connection part
- 6: Transmitting element part
- 7: Receiving element part
- 8: Control part
- 9: Arithmetic part
- 10: Receiving antenna
- 11: Transmitting antenna
- A, C: Flow of exhaust gas
- D: Electromagnetic wave

It is used a filter trapping particulates from a gas containing the particulates, a container 5 containing the filter, an upstream pipe 3 provided on the upstream side of the container 5 to lead the gas "A" into the container 5, a downstream pipe 4 provided on the downstream side of the container 5 to lead the gas "B" after the gas passed through the filter, a transmitting antenna 11 to transmit an electromagnetic wave having a frequency of 80 GHz or more and 200 GHz or less, and a receiving antenna 10 to receive the electromagnetic wave. An amount of the particulates trapped in the filter is detected based on an intensity of the electromagnetic wave received by the receiving antenna 10.

## Claims

1. A method of detecting an accumulation amount of particulates, the method using:
a filter (15) for trapping particulates from a gas containing the particulates;
a container (5) containing the filter;
an upstream pipe (3) provided on the upstream side of the container to lead the gas into the container;
a downstream pipe (4) provided on the downstream side of the container to lead the gas after the gas passed through the filter;
a transmitting antenna (11) to transmit an electromagnetic wave having a frequency of 80 GHz or more and 200 GHz or less; and
a receiving antenna (10) to receive the electromagnetic wave after passing through the filter,
**characterized in that**
the method comprises the step of detecting an amount of the particulates trapped in the filter based on an intensity of the electromagnetic wave received by the receiving antenna, wherein the transmitting antenna is provided in the downstream pipe and the receiving antenna is provided in the upstream pipe.

2. The method of claim 1, wherein the container (5) comprises a storage part (5b) for storing the filter, an upstream connection part (5a) connecting the storage part to the upstream pipe and a downstream connection part (5c) connecting the storage part to the downstream pipe, wherein an inside diameter of the upstream connection part is reduced from the storage part toward the upstream pipe, and wherein an inside diameter of the downstream connection part is reduced from the storage part toward the downstream pipe.

3. The method of claim 1 or 2, wherein the particulates comprise particulate matter.

4. The method of any one of claims 1 to 3, wherein the filter comprises cordierite.

5. A device for detecting an accumulation amount of particulates, the device comprising:
a filter (15) for trapping particulates from a gas containing the particulates;
a container (5) containing the filter;
an upstream pipe (3) provided on the upstream side of the container to lead the gas into the container;
a downstream pipe (4) provided on the downstream side of the container to lead the gas after the gas passed through the filter;
a transmitting antenna (11) to transmit an electromagnetic wave having a frequency of 80 GHz or more and 200 GHz or less; and
a receiving antenna (10) to receive the electromagnetic wave after passing through the filter,
**characterized in that** said device is configured to detect an amount of the particulates trapped in the filter based on an intensity of the electromagnetic wave received by the receiving antenna, wherein the transmitting antenna is provided in the downstream pipe and the receiving antenna is provided in the upstream pipe.

6. The device of claim 5, wherein the container (5) comprises a storage part (5b) for storing the filter, an upstream connection part (5a) connecting the storage part to the upstream pipe and a downstream connection part (5c) connecting the storage part to the downstream pipe, wherein an inside diameter of the upstream connection part is reduced from the storage part toward the upstream pipe, and wherein an inside diameter of the downstream connection part is reduced from the storage part toward the downstream pipe.

7. The device of claim 5 or 6, wherein the particulates comprise particulate matter.

8. The device of any one of claims 5 to 7, wherein the filter comprises cordierite.

## Patentansprüche

1. Verfahren zur Erfassung einer Ansammlungsmenge von Partikeln, wobei das Verfahren verwendet:
ein Filter (15) zum Einfangen von Partikeln aus einem die Partikel enthaltenden Gas;
ein Gehäuse (5), das das Filter enthält;
ein stromaufwärtiges Rohr (3), das auf der stromaufwärts liegenden Seite des Gehäuses bereitgestellt ist, um das Gas in das Gehäuse hinein zu führen;
ein stromabwärtiges Rohr (4), das auf der stromabwärts liegenden Seite des Gehäuses bereitgestellt ist, um das Gas zu führen, nachdem das Gas das Filter durchströmt hat;
eine Sendeantenne (11) zum Senden einer elektromagnetischen Welle mit einer Frequenz von 80 GHz oder mehr und 200 GHz oder weniger; und
eine Empfangsantenne (10) zum Empfangen der elektromagnetischen Welle nach Durchtreten des Filters,
**dadurch gekennzeichnet, dass**
das Verfahren den Schritt des Erfassens einer Menge der in dem Filter eingefangenen Partikel basierend auf einer Stärke der durch die Empfangsantenne empfangenen elektromagnetischen Welle aufweist, wobei die Sendeantenne in dem stromabwärtigen Rohr bereitgestellt ist und die Empfangsantenne in dem stromaufwärtigen Rohr bereitgestellt ist.

2. Verfahren gemäß Anspruch 1, wobei das Gehäuse (5) einen Unterbringungsteil (5b) zum Unterbringen des Filters, einen stromaufwärtigen Verbindungsteil (5a), der den Unterbringungsteil mit dem stromaufwärtigen Rohr verbindet, und einen stromabwärtigen Verbindungsteil (5c), der den Unterbringungsteil mit dem stromabwärtigen Rohr verbindet, aufweist, wobei ein Innendurchmesser des stromaufwärtigen Verbindungsteils ausgehend von dem Unterbringungsteil hin zu dem stromaufwärtigen Rohr verringert ist, und wobei ein Innendurchmesser des stromabwärtigen Verbindungsteils ausgehend von dem Unterbringungsteil hin zu dem stromabwärtigen Rohr verringert ist.

3. Verfahren gemäß Anspruch 1 oder 2, wobei die Partikel Feinstaub aufweisen.

4. Verfahren gemäß einem der Ansprüche 1 bis 3, wobei das Filter Kordierit aufweist.

5. Vorrichtung zur Erfassung einer Ansammlungsmenge von Partikeln, wobei die Vorrichtung aufweist:
ein Filter (15) zum Einfangen von Partikeln aus einem die Partikel enthaltenden Gas;
ein Gehäuse (5), das das Filter enthält;
ein stromaufwärtiges Rohr (3), das auf der stromaufwärts liegenden Seite des Gehäuses bereitgestellt ist, um das Gas in das Gehäuse hinein zu führen;
ein stromabwärtiges Rohr (4), das auf der stromabwärts liegenden Seite des Gehäuses bereitgestellt ist, um das Gas zu führen, nachdem das Gas das Filter durchströmt hat;
eine Sendeantenne (11) zum Senden einer elektromagnetischen Welle mit einer Frequenz von 80 GHz oder mehr und 200 GHz oder weniger; und
eine Empfangsantenne (10) zum Empfangen der elektromagnetischen Welle nach Durchtreten des Filters,
**dadurch gekennzeichnet, dass** die Vorrichtung konfiguriert ist, eine Menge der in dem Filter eingefangenen Partikel basierend auf einer Stärke der durch die Empfangsantenne empfangenen elektromagnetischen Welle zu erfassen, wobei die Sendeantenne in dem stromabwärtigen Rohr bereitgestellt ist und die Empfangsantenne in dem stromaufwärtigen Rohr bereitgestellt ist.

6. Vorrichtung gemäß Anspruch 5, wobei das Gehäuse (5) einen Unterbringungsteil (5b) zum Unterbringen des Filters, einen stromaufwärtigen Verbindungsteil (5a), der den Unterbringungsteil mit dem stromaufwärtigen Rohr verbindet, und einen stromabwärtigen Verbindungsteil (5c), der den Unterbringungsteil mit dem stromabwärtigen Rohr verbindet, aufweist, wobei ein Innendurchmesser des stromaufwärtigen Verbindungsteils ausgehend von dem Unterbringungsteil hin zu dem stromaufwärtigen Rohr verringert ist, und wobei ein Innendurchmesser des stromabwärtigen Verbindungsteils ausgehend von dem Unterbringungsteil hin zu dem stromabwärtigen Rohr verringert ist.

7. Vorrichtung gemäß Anspruch 5 oder 6, wobei die Partikel Feinstaub aufweisen.

8. Vorrichtung gemäß einem der Ansprüche 5 bis 7, wobei das Filter Kordierit aufweist.

## Revendications

1. Procédé de détection d'une quantité d'accumulation de particules, le procédé utilisant :
un filtre (15) pour piéger des particules à partir d'un gaz contenant des particules ;
un récipient (5) contenant le filtre ;
une conduite en amont (3) disposée sur le côté en amont du récipient pour diriger le gaz dans le récipient ;
une conduite en aval (4) disposée sur le côté en aval du récipient pour diriger le gaz après le passage du gaz a travers le filtre ;
une antenne d'émission (11) pour transmettre une onde électromagnétique ayant une fréquence de 80 GHz ou plus et de 200 GHz ou moins ; et
une antenne de réception (10) pour recevoir l'onde électromagnétique après son passage à travers le filtre,
**caractérisé en ce que**
le procédé comprend l'étape consistant à détecter une quantité de particules piégées dans le filtre sur la base de l'intensité de l'onde électromagnétique reçue par l'antenne de réception, où l'antenne d'émission est prévue dans la conduite en aval et l'antenne de réception est prévue dans la conduite en amont.

2. Procédé de la revendication 1, dans lequel le récipient (5) comprend une partie de stockage (5b) pour stocker le filtre, une partie de liaison en amont (5a) reliant la partie de stockage à la conduite en amont et une partie de liaison en aval (5c) reliant la partie de stockage à la conduite en aval, dans lequel un diamètre intérieur de la partie de liaison en amont est réduit de la partie de stockage vers la conduite en amont, et dans lequel un diamètre intérieur de la partie de liaison en aval est réduit de la partie de stockage vers la conduite en aval.

3. Procédé de la revendication 1 ou 2, dans lequel les particules comprennent des matières particulaires.

4. Procédé de l'une quelconque des revendications 1 à 3, dans lequel le filtre comprend de la cordiérite.

5. Dispositif de détection d'une quantité d'accumulation de particules, le dispositif comprenant :
un filtre (15) pour piéger des particules à partir d'un gaz contenant des particules ;
un récipient (5) contenant le filtre ;
une conduite en amont (3) disposée sur le côté en amont du récipient pour diriger le gaz dans le récipient ;
une conduite en aval (4) disposée sur le côté en aval du récipient pour diriger le gaz après le passage du gaz a travers le filtre ;
une antenne d'émission (11) pour transmettre une onde électromagnétique ayant une fréquence de 80 GHz ou plus et de 200 GHz ou moins ; et
une antenne de réception (10) pour recevoir l'onde électromagnétique après son passage à travers le filtre,
**caractérisé en ce que** ledit dispositif est configuré pour détecter une quantité des particules piégées dans le filtre sur la base de l'intensité de l'onde électromagnétique reçue par l'antenne de réception, dans lequel l'antenne d'émission est prévue dans la conduite en aval et l'antenne de réception est prévue dans la conduite en amont.

6. Dispositif de la revendication 5, dans lequel le récipient (5) comprend une partie de stockage (5b) pour stocker le filtre, une partie de liaison en amont (5a) reliant la partie de stockage à la conduite en amont et une partie de liaison en aval (5c) qui relie la partie de stockage à la conduite en aval,
dans lequel un diamètre intérieur de la partie de liaison en amont est réduite de la partie de stockage vers la conduite en amont, et dans lequel un diamètre intérieur de la partie de liaison en aval est réduite de la partie de stockage vers la conduite en aval.

7. Dispositif de la revendication 5 ou 6, dans lequel les particules comprennent des matières particulaires.

8. Dispositif de l'une quelconque des revendications 5 à 7, dans lequel le filtre comprend de la cordiérite.
